# FASCICULE DE BREVET EUROPEEN

(11) **EP 0 493 205 B1**
(45) Date de publication et mention de la délivrance du brevet: **12.04.1995**
(21) Numéro de dépôt: 91403450.9
(22) Date de dépôt: 19.12.1991
(51) Int. Cl.: C03B 23/033, C03B 23/025, C03B 27/044

(54) **Procédé et dispositif d'obtention de feuilles de verre bombées**
Verfahren und Vorrichtung zum Herstellen von gebogen Glasscheiben
Method and apparatus for making curved glass sheets

(30) Priorité: 21.12.1990 FR 9016178
(43) Date de publication de la demande: 01.07.1992
(73) Titulaire: SAINT-GOBAIN VITRAGE INTERNATIONAL, 92400 Courbevoie (FR)
(72) Inventeur: Letemps, Bernard, F-60150 Thourotte (FR); Leclercq, Jacques, F-80240 Roisel (FR)
(74) Mandataire: Menes, Catherine

(56) Documents cités:
- EP-A- 0 133 113
- DE-A- 1 919 886
- FR-A- 2 221 409
- FR-A- 2 442 219
- FR-A- 2 604 992
- US-A- 3 869 269

## Description

L'invention a trait aux techniques d'obtention de feuilles de verre bombées et éventuellement trempées thermiquement, notamment bombées selon des formes complexes non cylindriques. Plus particulièrement l'invention concerne celles de ces techniques dans lesquelles les feuilles de verre sont amenées à défiler sur un lit de conformation constitué par des tiges conformatrices par exemple des éléments tournants disposées selon un trajet à profil courbe dans la direction de défilement des feuilles de verre. L'invention s'applique par exemple à la réalisation de vitrages automobiles, par exemple du type custodes, ou vitres latérales.

Ces techniques de bombage-trempe sont connues par exemple du brevet français 2 442 219 qui propose de préchauffer les feuilles de verre à température de ramollissement puis de les faire défiler sur un convoyeur prolongeant sans cassure le chemin suivi par la feuille de verre depuis le four, ledit convoyeur formant un lit de conformation passant au travers d'une zone terminale de trempe et étant constitué par des éléments tournants disposés selon un trajet à profil courbe, en pratique un profil circulaire avec une concavité de préférence tournée vers le haut. Dans ce cas, la trajectoire suivie par la feuille de verre n'est donc pas plane mais cylindrique, les génératrices du cylindre étant horizontales et de préférence perpendiculaires à la direction d'amenée du verre celui-ci étant amené à plat dans l'installation. Le rayon du cylindre sur lequel s'appuie la trajectoire de la feuille de verre correspond au rayon de courbure conféré à la feuille de verre dans la direction parallèle à la direction de défilement.

Avec des éléments tournants constitués par des tiges droites, on obtient un cylindre droit. D'autres formes toriques de révolution sont obtenues en substituant aux tiges droites des rouleaux en forme par exemple du type guidons, rouleaux ventrus associés à des diabolos ou encore tiges contrefléchies. Suivant la courbure des éléments tournants, on peut ainsi réaliser des formes de vitrage toriques de révolution dont le rayon de courbure varie entre 1 mètre et l'infini pour la courbure principale et entre 20 mètres et l'infini pour la courbure secondaire, l'infini correspondant à des rouleaux droits et donc à une forme cylindrique.

S'ils autorisent une plus grande variété de formes de vitrages, les rouleaux en forme présentent néanmoins nombre d'inconvénients. Tout d'abord, il est en pratique très difficile de les utiliser en l'absence de contre-rouleaux supérieurs contrairement au cas des tiges droites (voir EP-A-263 030) ; or chaque contre-rouleau supérieur doit avoir une forme rigoureusement complémentaire de celle du rouleau inférieur correspondant et la maîtrise de la forme d'un rouleau est à l'évidence d'autant plus compliquée à obtenir que cette forme s'écarte de la simple tige droite montée sans contreflexion. D'autre part, ils sont plus onéreux et ce coût est accru par la nécessité de stocks. Enfin, des considérations d'ordre essentiellement technologiques limitent le rayon minimum de courbure secondaire à 20 mètres ce qui reste une courbure relativement peu prononcée.

Les vitres latérales des véhicules automobiles constituent aujourd'hui la cible privilégiée de ces techniques de bombage avantageusement mises en oeuvre avec des cadences de production très grandes dues notamment à la possibilité de faire se suivre des feuilles de verre espacées les unes des autres de quelques centimètres seulement. De plus ces techniques de bombage permettent une très grande reproductibilité du galbe et de la qualité optique des vitrages finals ce qui est particulièrement apprécié d'un point de vue industriel.

Toutefois, ces techniques de bombage sont exclues dans tous les cas où la forme finale visée comporte au moins une ligne de pliure, à l'exemple des vitrages dits affleurants dont la surface principale est tangente avec le reste de la carrosserie après montage dans leur encadrement. De fait, ces vitrages de formes plus complexes ne peuvent à ce jour être obtenus que par application contre une forme de bombage et bien souvent un pressage complémentaire sur un cadre de bombage, ce qui suppose bien sûr une interruption du défilement des feuilles de verre et un espacement relativement grand de celles-ci (lorsqu'une première feuille est en cours de bombage, l'outil de bombage est indisponible pendant toute la durée du bombage alors que dans une installation telle que décrite dans le brevet français 2 442 219, le bord extérieur d'une feuille de verre peut pénétrer dans la zone de conformation alors que le bord postérieur de la feuille précédente s'y trouve encore).

En dehors de cet aspect limitation des cadences de production, on est également confronté au problème de la parfaite maîtrise de la courbure effectivement conférée lors du bombage et de l'exclusion de toute déformation parasite due par exemple à l'affaissement du verre sous son propre poids dans les zones où il n'est pas soutenu. Ces déformations parasites se produisent généralement lors du transfert de la feuille de verre de la station de bombage à la station de trempe et sont souvent d'autant plus difficiles à éviter que la courbure conférée à la feuille de verre est faible, ce qui fait que la feuille de verre a encore une propension au bombage très grande et difficilement maîtrisable.

Ce problème des courbures parasites est particulièrement gênant dans le cas des vitres latérales équipées le plus souvent de dispositifs de montée-baisse qui supposent que les feuilles de verre ne présentent pas - ou pratiquement pas - de courbure parasite de façon à les laisser coulisser dans le logement de la portière prévu à cet effet. Par contre, les procédés de bombage-trempe sur un lit de conformation à profil courbe apportent une solution très satisfaisante à ce problème de la maîtrise de la courbure en raison du soutien permanent des feuilles de verre par les rouleaux et du fait que les feuilles de verre sont trempées directement après leur bombage sans avoir à être transférées d'un poste de bombage à un poste de trempe.

Indépendamment de cet aspect maîtrise de la courbure, il peut être remarqué que ces techniques avec cadre de pressage impliquent des cadences de production bien moins grandes que celles obtenues avec les procédés de bombage-trempe où les feuilles de verre défilent de façon continue sans arrêt. Enfin, même si de tels vitrages peuvent être considérés comme relativement complexes du fait de leur pliure très près d'un bord du volume, ils restent somme toute globalement de forme cylindrique de sorte qu'une ligne de bombage prévue pour la production des vitrages les plus complexes apparaît quelque peu surdimensionnée et donc mal adaptée.

Il doit être par ailleurs noté qu'il est connu de la demande de brevet FR-A-2 221 409 de bomber du verre, se présentant en ruban ou en feuilles en l'acheminant sur une pluralité de rouleaux transporteurs répartis en deux nappes de rouleaux parallèles entre eux, les plans contenant les axes des rouleaux de chaque nappe faisant entre eux un angle et leur intersection étant perpendiculaire à l'axe des rouleaux, le sommet de l'angle formé par ces deux plans étant dirigé vers le bas. Dans le cas d'une feuille de verre individuelle, découpée à l'avance, on amène la feuille dans le poste de bombage dont les rouleaux sont maintenus à l'horizontale puis, lorsque la feuille est en place, on donne simultanément l'inclinaison voulue pour réaliser le formage.

Un tel procédé est destiné à l'obtention de formes d'une surface développable, les rouleaux de chaque nappe étant disposés sur un même plan. Dans le cas des volumes visés par l'invention vient s'ajouter ou plus exactement, précède une courbure principale - le plus souvent cylindrique - de sorte que la forme visée n'est pas développable. (et est accessible uniquement en raison de la capacité du verre à fluer). Par ailleurs, cette courbure principale rigidifie fortement le volume, ce qui fait qu'il devient très difficile de le plier transversalement à la ligne de courbure principale.

Par ailleurs, dans le procédé décrit dans la demande de brevet FR-A-2 221 409 précité, la courbure dépend étroitement de la température acquise par le verre. Or, il est bien connu que celle-ci peut - pour diverses raisons - varier au cours du temps de quelques degrés ce qui conduit à une certaine imprécision des formes obtenues, imprécision qui doit être compensée par un passage entre une paire de rouleaux cintrés calibreurs qui pincent la feuille de verre. Pendant ce bombage complémentaire entre ces rouleaux calibreurs, le verre continue de se refroidir de sorte qu'il devient difficile de le tremper thermiquement, sauf à le surchauffer dans le four ce qui a un effet néfaste sur la qualité optique.

L'objectif de la présente invention est d'élargir l'éventail des formes de vitrages susceptibles d'être produites industriellement à partir d'une installation de bombage-trempe opérant par défilement des feuilles de verre sur un lit de conformation définissant une trajectoire à profil courbe dans le sens de défilement du verre, ceci par exemple en vue de la réalisation par ce type d'installation de la plupart des vitrages bombés et trempés montés sur des véhicules automobiles, y compris les vitrages montés affleurants.

Conformément à la revendication 1, cet objectif est atteint en faisant défiler les feuilles de verre préchauffées à la température de bombage simultanément sur un lit principal de conformation dont la trajectoire longitudinale est substantiellement circulaire ou substantiellement conique de révolution et un ou deux lits secondaires de conformation dont les génératrices sont inclinées par rapport à celles du lit principal. La feuille de verre voit ainsi sa partie principale, notamment sa partie centrale conformée selon le lit principal alors qu'au moins un de ces côtés subit une trajectoire différente dictée par un lit secondaire de conformation.

Les trajets des éléments tournants définissant les deux types de lits de conformation sont identiques, vue dans la direction de défilement de la feuille de verre. Selon les cas, ces trajets peuvent être curvilignes [la partie principale de la feuille de verre acquiert une forme cylindrique] ou encore substantiellement conique de révolution suivant en cela l'enseignement de la demande de brevet européen EP-A-0 474 531 déposée le 13 août 1991 au nom de la demanderesse et publiée le 11 mars 1992, ainsi appartenant à l'état de la technique visé à l'article 54, paragraphe 3 de la CBE.

Le lit principal de conformation s'appuie de préférence sur une trajectoire tangente à la trajectoire plane des feuilles de verre dans le four de réchauffage, ceci afin d'éviter toute cassure qui se traduirait par une déformation selon une ligne essentiellement parallèle au bord avant de la feuille de verre. Le ou les lits secondaires de conformation sont par contre relevés de sorte que la feuille de verre va présenter finalement des bords cassés (modèle obtenu avec un lit de conformation rectiligne vu dans une direction perpendiculaire à la direction de défilement des feuilles de verre, les éléments de conformation des lits secondaires sont dans ce cas type rouleaux droits) ou des bords arrondis (modèle obtenu avec un lit de conformation curviligne vu dans une direction perpendiculaire à la direction de défilement des feuilles de verre, les éléments de conformation des lits secondaires sont dans ce cas courbes).

L'invention a également pour objet une machine de bombage comportant un lit principal de conformation dont la trajectoire longitudinale est substantiellement circulaire ou substantiellement conique de révolution et un ou deux lits secondaires de conformation dont les tiges conformatrices sont constituées par des éléments tournants imbriqués entre les tiges conformatrices du lit principal de conformation et sont inclinées par rapport à ces dernières.

Dans la grande majorité des cas, les lits de conformation secondaires doivent comporter deux séries d'éléments tournants entre lesquels les feuilles de verre défilent, cette configuration permettant un bon respect de la localisation de la pliure et/ou un arrondi qui correspond exactement à celui souhaité même si la température du verre varie.

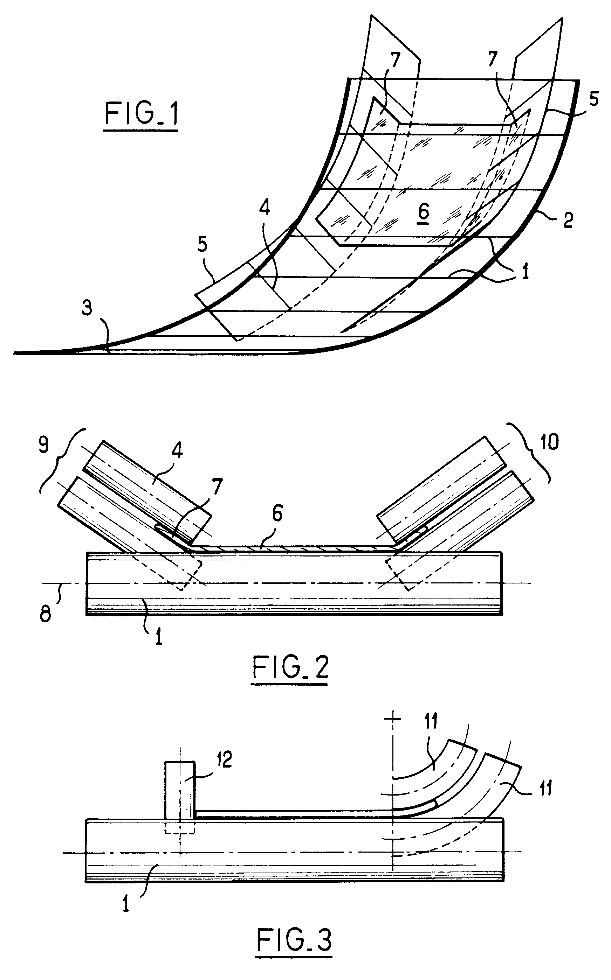

D'autres détails et caractéristiques avantageuses de l'invention ressortent de la description détaillée faite ci-après en référence aux dessins annexés qui représentent:
. **figure 1** : un schéma en perspective d'une machine de bombage prévue pour la réalisation de vitrages essentiellement cylindriques avec des coins cassés droits,
. **figure 2** : une vue de face d'une machine de bombage avec un lit principal plan et deux lits secondaires droits,
. **figure 3** : une vue de face d'une machine de bombage avec un lit principal plan et un lit secondaire avec des éléments tournants en forme.

La figure 1 illustre le principe du procédé de bombage selon l'invention appliqué dans le cas présent à une machine de bombage comportant un lit principal de conformation dont les tiges conformatrices 1, de préférence du type rouleaux cylindriques droits, sont disposées selon un profil circulaire 2 dans la direction de défilement des feuilles de verre. La concavité du lit est tournée vers le haut. La machine de bombage est disposée immédiatement en aval d'un convoyeur plan d'amenée des feuilles de verre chauffées à la température de bombage ; pour éviter les déformations optiques qui résulteraient d'une cassure du chemin suivi par les feuilles de verre, la courbe du lit principal de conformation est tangente à ce convoyeur 3 qui du fait de la représentation en perspective, apparaît simplement sous la forme d'un trait unique.

Comme indiqué dans le brevet FR-A-2 604 992, si les feuilles de verre défilent à une vitesse élevée au moins égale à 10cm/s et de préférence de l'ordre de 15 à 18cm/s, elles vont acquérir le profil correspondant au lit de conformation sous le seul effet combiné de la gravité et de la vitesse, sans l'appui de moyens de maintien supérieurs par exemple du type rouleaux. Pour des feuilles de verre de 3 mm d'épaisseur, les rouleaux 1 sont typiquement espacés de 50 à 100 mm. Dans le cas présent, elles vont ainsi acquérir principalement un profil cylindrique.

A ce lit principal viennent s'ajouter deux lits de conformation secondaires placés sur les côtés et dont les tiges conformatrices 4 sont imbriquées entre les rouleaux 1 du lit principal. Ces tiges conformatrices sont disposées selon un profil circulaire 5 semblable au profil circulaire 2, mais inclinées par rapport au lit principal de sorte que la feuille de verre 6 a ses bords 7 relevés ce qui conduit à des volumes dits à coins cassés.

La disposition relative des tiges conformatrices 4 et des rouleaux 1 est plus spécialement visible sur la figure 2 qui correspond à une vue de face d'une machine de bombage dont le lit principal de conformation plan, ou plus généralement à un élément de base d'une machine telle que celle représentée figure 1. Sur cette figure 2, on a représenté le rouleau cylindrique droit 1 et son axe de rotation 8 avec en arrière plan deux paires 9, 10 de rouleaux cylindriques droits appartenant chacune à un lit de conformation secondaire. Les rouleaux de chaque paire sont inclinés par rapport à l'axe 8 d'un angle qui peut être compris entre 0 et 90 et est de l'ordre de 5 à 10 pour le cas d'un vitrage automobile destiné à être monté affleurant.

Compte-tenu de la pente élevée, les rouleaux supérieurs sont nécessaires pour aider à l'avancement des feuilles de verre. Si la surface relevée de la feuille de verre est relativement faible et/ou si l'angle visé est très faible, par exemple de l'ordre de 5 , les lits secondaires 9, 10 peuvent présenter un angle d'inclinaison constant, l'entraînement par le lit principal étant suffisant pour forcer la progression au travers des premières paires de rouleaux. Dans les cas contraires, il est préférable de procéder avec une certaine progressivité, l'angle d'inclinaison augmentant par exemple pour les trois premières paires.

La machine de bombage de la figure 1 comporte dans sa partie aval des moyens pour refroidir de manière douce et contrôlée les feuilles de verre bombées. De manière connue, elle peut être également munie d'une zone de trempe thermique. Pour cela, des buses de soufflage d'air froid sont disposées entre les tiges conformatrices du lit principal dans la partie aval du chemin suivi par la feuille de verre. Selon une première variante de l'invention, on dispose ces buses sur toute la largeur de la machine de bombage et les lits secondaires ne soutiennent plus la feuille de verre dès que celle-ci pénètre dans la zone de trempe. Selon une seconde variante de l'invention, on dispose une première série de buses juste en regard de la partie centrale de la feuille de verre, de sorte que l'air de trempe va, en s'échappant sur les côtés, commencer également à refroidir les bords relevés de la feuille de verre - refroidissement d'ailleurs d'autant plus intense que l'angle d'inclinaison est grand et que ces bords s'opposent par conséquent à l'échappement de l'air. Cette première série de buses de trempe est complétée par une seconde série de buses s'étendant cette fois sur toute la largeur de la machine de bombage, se substituant donc aux éléments des lits secondaires de conformation. Cette seconde variante de l'invention est plus spécialement préférée car les bords de la feuille de verre pénétrant dans la zone de trempe quelque peu raidis et présentant de ce faire une moindre tendance au bâillement.

Dans les exemples schématisés figures 1 et 2, les lits de conformation secondaires sont plans. Toutefois, les tiges conformatrices 4 peuvent être également constituées par des éléments en forme comme ceux représentés en 11 à la figure 3. On peut utiliser pour cela des tiges cintrées autour desquelles sont enfilées des séries de bagues entourées par une gaine mue en rotation. Peuvent également être utilisés des éléments en forme constitués par des tiges droites sur lesquelles sont enfilées des bagues qui définissent une surface de conformation analogue à des rouleaux en forme de diabolo ou de fuseau, mais qui entraînent la feuille de verre de manière constante.

Enfin, le vitrage peut ne comporter qu'un seul coin relevé. Dans ce cas, le caractère asymétrique des forces qui s'exercent sur la feuille de verre doit être compensé par des butées, par exemple constituées par des rouleaux 12 montés à 90 , de façon à guider la feuille de verre selon la direction de défilement souhaitée.

## Revendications

1. Procédé de bombage de feuilles de verre (6) préchauffées à température de bombage par défilement des feuilles de verre simultanément sur un lit principal de conformation dont la trajectoire longitudinale (2) est substantiellement circulaire ou substantiellement conique de révolution et un ou deux lits de conformation secondaires dont les génératrices sont inclinées par rapport à celles du lit principal.

2. Procédé de bombage de feuilles de verre (6) selon la revendication 1, **caractérisé en ce que** le lit principal de conformation est tangent à la trajectoire plane des feuilles de verre dans le four de réchauffage.

3. Procédé de bombage de feuilles de verre (6) selon l'une des revendications précédentes, **caractérisé en ce que** le ou lesdits lits de conformation secondaires sont rectilignes vus dans une direction perpendiculaire à la direction de défilement des feuilles de verre.

4. Procédé de bombage de feuilles de verre (6) selon l'une des revendications précédentes, **caractérisé en ce que** le ou lesdits lits de conformation secondaires sont curvilignes vus dans une direction perpendiculaire à la direction de défilement des feuilles de verre.

5. Procédé de bombage de feuilles de verre (6) selon l'une des revendications 1 à 4, **caractérisé en ce que** les feuilles de verre subissent également une trempe thermique lors de leur défilement.

6. Procédé de bombage de feuilles de verre (6) selon l'une des revendications 1 à 4, **caractérisé en ce que** les feuilles de verre sont refroidies de façon douce et contrôlée lors de leur défilement.

7. Machine de bombage de feuilles de verre (6) comportant un lit principal de conformation dont la trajectoire longitudinale (2) est substantiellement circulaire ou substantiellement conique de révolution et un ou deux lits de conformation secondaires dont les tiges conformatrices (4) sont constituées par des éléments tournants qui sont imbriqués entre les tiges conformatrices (1) du lit de conformation principal et sont inclinées par rapport à ces dernières.

8. Machine de bombage de feuilles de verre (6) selon la revendication 7, **caractérisée en ce que** le ou lesdits lits de conformation secondaires comportent deux séries (9, 10) d'éléments tournants (4; 11) entre lesquels les feuilles de verre défilent.

9. Machine de bombage de feuilles de verre (6) selon la revendication 7 ou 8, **caractérisée en ce que** lesdits éléments tournants (4) du ou desdits lits de conformation secondaires sont constitués par des tiges droites.

10. Machine de bombage de feuilles de verre (6) selon la revendication 7 ou 8, **caractérisée en ce que** lesdits éléments tournants (11) du ou desdits lits de conformation secondaires sont constitués par des tiges cintrées sur lesquelles sont enfilées des bagues libres en rotation ou des tiges droites sur lesquelles sont enfilées des bagues en forme.

11. Machine de bombage selon l'une des revendications 7 à 10, **caractérisée en ce que** l'angle d'inclinaison des éléments tournants du ou desdits lits de conformation secondaires est accru en aval du ou desdits lits de conformation.

12. Machine de bombage selon l'une des revendications 7 à 11, **caractérisée en ce qu'**elle comporte en outre des caissons de soufflage de trempe dans la première partie de la zone de trempe avec des buses dirigées entre les éléments tournants (1) dudit lit de conformation principal et dans la seconde partie de ladite zone de trempe des buses supplémentaires se substituant aux éléments tournants (4; 11) du ou desdits lits de conformation secondaires.

## Claims

1. Method of bending glass sheets (6) preheated to bending temperature, by passage of the glass sheets simultaneously over a principal shaping bed, the longitudinal trajectory (2) of which is substantially circular or substantially a cone of revolution, and one or two secondary shaping beds, the generatrices of which are inclined relative to those of the principal bed.

2. Method of bending glass sheets (6) according to Claim 1, characterized in that the principal shaping bed is tangential to the plane trajectory of the glass sheets through the reheating furnace.

3. Method of bending glass sheets (6) according to one of the preceding Claims, characterized in that said secondary shaping bed or beds are rectilinear as viewed in a direction perpendicular to the direction of travel of the glass sheets.

4. Method of bending glass sheets (6) according to one of the preceding Claims, characterized in that said secondary shaping bed or beds are curvilinear as viewed in a direction perpendicular to the direction of travel of the glass sheets.

5. Method of bending glass sheets (6) according to one of Claims 1 to 4, characterized in that the glass sheets also undergo a thermal toughening during their travel.

6. Method of bending glass sheets (6) according to one of Claims 1 to 4, characterized in that the glass sheets are cooled in a gentle and controlled manner during their travel.

7. Bending machine for glass sheets (6), comprising a principal shaping bed, the longitudinal trajectory (2) of which is substantially circular or substantially a cone of revolution, and one or two secondary shaping beds, the shaping rods (4) of which are constituted of revolving elements which are fitted in between the shaping rods (1) of the principal shaping bed and are inclined with respect to the latter.

8. Bending machine for glass sheets (6) according to Claim 7, characterized in that said secondary shaping bed or beds comprise two series (9, 10) of revolving elements (4; 11), beween which the glass sheets pass.

9. Bending machine for glass sheets (6) according to Claim 7 or 8, characterized in that said revolving elements (4) of said secondary shaping bed or beds are constituted of straight rods.

10. Bending machine for glass sheets (6) according to Claim 7 or 8, characterized in that said revolving elements (11) of said secondary shaping bed or beds are constituted of curved rods, on which are threaded rings free in rotation, or straight rods on which are threaded shaped rings.

11. Bending machine according to one of Claims 7 to 10, characterized in that the angle of inclination of the revolving elements of said secondary shaping bed or beds increases in the downstream direction of said shaping bed or beds.

12. Bending machine according to one of Claims 7 to 11, characterized in that it comprises, in addition, toughening blowing boxes in the first part of the toughening zone, with nozzles directed between the revolving elements (1) of said principal shaping bed, and in the second part of said toughening zone supplementary nozzles replacing the revolving elements (4; 11) of the secondary shaping bed or beds.

## Patentansprüche

1. Verfahren zum Biegen von auf Biegetemperatur erhitzten Glasscheiben (6), bei dem die Glasscheiben gleichzeitig ein Hauptformgebungsbett, dessen Bahn (2) in Längsrichtung im wesentlichen kreisförmig oder im wesentlichen rotationskegelförmig ist, und ein oder zwei Nebenformgebungsbetten durchlaufen, deren Erzeugenden in bezug auf diejenigen des Hauptformgebungsbettes geneigt sind.

2. Verfahren zum Biegen von Glasscheiben (6) nach Anspruch 1, **dadurch gekennzeichnet,** daß das Hauptformgebungsbett an die ebene Bahn der Glasscheiben im Erwärmungsofen anschließt.

3. Verfahren zum Biegen von Glasscheiben (6) nach Anspruch 1 oder 2, **dadurch gekennzeichnet**, daß das oder die Nebenformgebungsbett/en in einer senkrecht zur Durchlaufrichtung der Glasscheiben gesehenen Richtung gerade ist/sind.

4. Verfahren zum Biegen von Glasscheiben (6) nach einem der vorhergehenden Ansprüche, **dadurch gekennzeichnet**, daß das oder die Nebenformgebungsbett/en in einer senkrecht zur Durchlaufrichtung der Glasscheiben gesehenen Richtung kurvenförmig ist/sind.

5. Verfahren zum Biegen von Glasscheiben (6) nach einem der Ansprüche 1 bis 4, **dadurch gekennzeichnet**, daß die Glasscheiben während ihres Durchlaufs auch einem thermischen Vorspannvorgang unterworfen werden.

6. Verfahren zum Biegen von Glasscheiben (6) nach einem der Ansprüche 1 bis 4**, dadurch gekennzeichnet**, daß die Glasscheiben während ihres Durchlaufs sanft und geregelt abgekühlt werden.

7. Vorrichtung zum Biegen von Glasscheiben (6), umfassend ein Hauptformgebungsbett, dessen Bahn (2) in Längsrichtung im wesentlichen kreisförmig oder im wesentlichen rotationskegelförmig ist, und ein oder zwei Nebenformgebungsbetten, deren Formgebungswellen (4) aus drehbaren Elementen gebildet sind, die zwischen den Formgebungswellen (1) des Hauptformgebungsbettes angeordnet und in bezug auf diese geneigt sind.

8. Vorrichtung zum Biegen von Glasscheiben (6) nach Anspruch 7, **dadurch gekennzeichnet**, daß das oder die Nebenformgebungsbett/en zwei Reihen (9, 10) drehbare Elemente (4; 11) umfaßt/umfassen, zwischen denen die Glasscheiben durchlaufen.

9. Vorrichtung zum Biegen von Glasscheiben (6) nach Anspruch 7 oder 8, **dadurch gekennzeichnet**, daß die drehbaren Elemente (4) des Nebenformgebungsbettes oder der Nebenformgebungsbetten aus geraden Wellen bestehen.

10. Vorrichtung zum Biegen von Glasscheiben (6) nach Anspruch 7 oder 8, **dadurch gekennzeichnet**, daß die drehbaren Elemente (11) des Nebenformgebungsbettes oder der Nebenformgebungsbetten aus gebogenen Wellen, auf denen frei drehbare Ringe, oder aus geraden Wellen bestehen, auf denen geformte Ringe aufgereiht sind.

11. Biegevorrichtung nach einem der Ansprüche 7 bis 10, **dadurch gekennzeichnet**, daß sich der Neigungswinkel der drehbaren Elemente des Nebenformgebungsbettes oder der Nebenformgebungsbetten im Verlauf des Nebenformgebungsbettes oder der Nebenformgebungsbetten vergrößert.

12. Biegevorrichtung nach einem der Ansprüche 7 bis 11, **dadurch gekennzeichnet**, daß sie außerdem im ersten Teil der Vorspannzone Abschreckblaskästen mit Düsen, welche zwischen die drehbaren Elemente (1) des Hauptformgebungsbettes gerichtet sind, und im zweiten Teil dieser Vorspannzone ergänzende Düsen umfaßt, welche an die Stelle der drehbaren Elemente (4; 11) des Nebenformgebungsbettes oder der Nebenformgebungsbetten treten.
